# EUROPEAN PATENT APPLICATION

(11) **EP 0 999 416 A2**
(43) Date of publication of application: **10.05.2000**
(21) Application number: 99308772.5
(22) Date of filing: 04.11.1999
(51) Int. Cl.: F24D 3/14

(54) **Method of installing underfloor heating panels**

(30) Priority: 05.11.1998 GB 9824084
(71) Applicant: Ingram, Rex Anthony, Axminster, Devon EX13 7PU (GB)
(72) Inventor: Ingram, Rex Anthony, Axminster, Devon EX13 7PU (GB)
(74) Representative: Brown, Michael Stanley

(57) **Abstract**

A method of installing underfloor heating includes the following steps:-
a) producing a floor plan,
b) designing a pipe layout and adding it to the floor plan,
c) producing a panel layout,
d) making the panels, which include channels to receive a heating pipes,
e) supplying the panels to site,
f) placing the panels in position,
g) inserting the pipes in the channels, and
h) placing flooring over the pipes.

## Description

### Field of the Invention

This invention relates to a method of installing underfloor heating in a building.

The method of the present invention has been developed to make it easier to install underfloor heating in floors which are constructed either as a timber floor deck which is fully supported on rigid insulation (normally referred to as a fully-floating floor) or as a screeded floor over insulation. In particular the invention addresses two requirements:
i. how to install underfloor heating in buildings which have floors which are of irregular shapes and which do not therefore suit current installation methods, and
ii. how to reduce the cost of underfloor heating in mass-produced buildings to an absolute minimum while also at the same time reducing the skills needed of an installer to a minimum.

It is presently common practice to install warm water underfloor heating in a screeded floor using any one of the construction methods illustrated in Figures 1, 2 and 3.

Figures 1 and 1a show how rigid insulation panels (a) are covered with steel reinforcing mesh (b) and how the heating pipe (c) is tied to the top of the mesh. Screed (d) is then laid over the whole.

Figures 2 and 2a show how rigid insulation panels (a) have heating pipe (c) fixed in place using staples (e) which catch into a fabric surface which is bonded to the top surface of the insulation. Screed (d) is then laid over the whole.

Figures 3 and 3a show how rigid insulation panels (a) have fixing rails (f) attached and how the heating pipe (c) is held in place by them. Screed (d) is then laid over the whole.

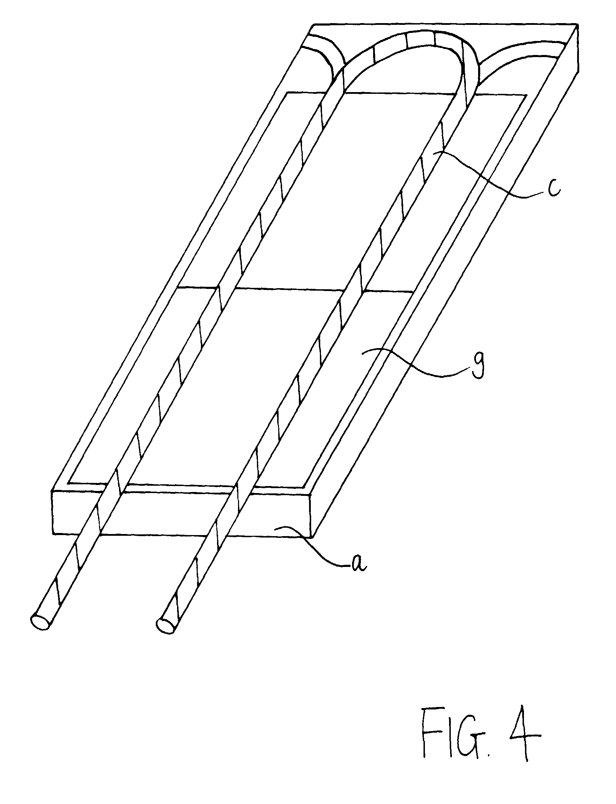

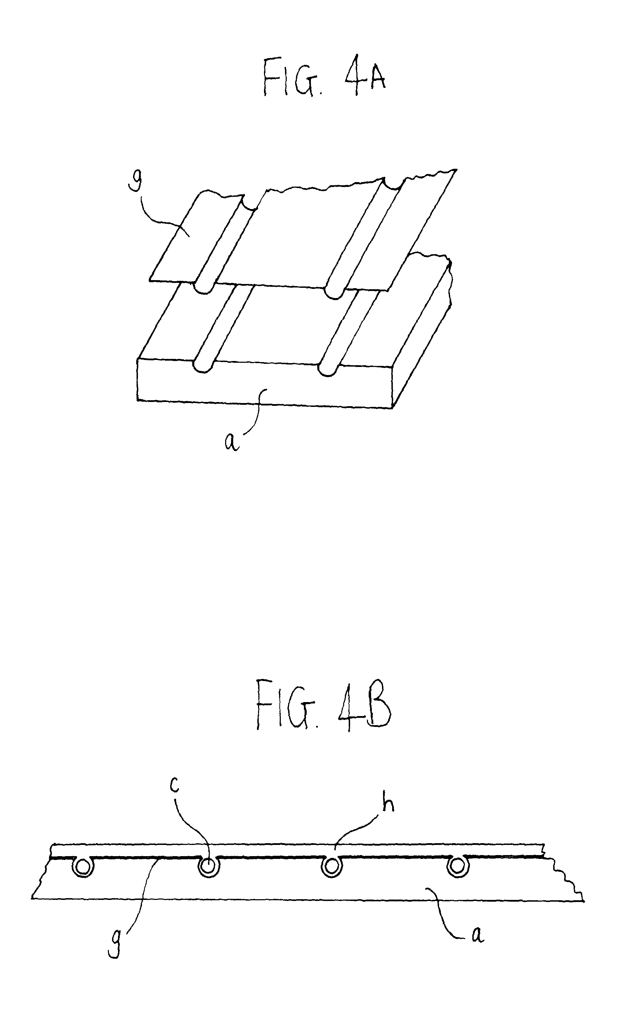

It is current practice to install warm water underfloor heating in a fully floating floor using grooved rigid insulation and rigid aluminium heat diffuser plates. Figures 4, 4a and 4b show rigid insulation (a) with heat diffuser plates (g) and heating pipe (c) beneath a timber floor deck (h).

The diffuser plates (g) are typically formed from hard-temper aluminium sheets 0.4 to 0.7 mm. thick and they have channels to accept the heating pipe. The width of the channels formed in the plates corresponds with the outside diameter of the heating pipe. Figures 4, 4a and 4b show a configuration having two channels per plate, but it is also common to have a single channel per plate when a plate is to be used with larger diameter pipe. The diffuser plates (g) are set on top of the grooved insulation in such a way that each preformed diffuser plate (g) engages with the channels formed in the top of the insulation (a). The heating pipe (c) is pressed into the channels in the diffuser plate (g) which then acts as a fin to the pipe (c), conducting the heat away from the pipe (c) and spreading it evenly across the underside of the floor deck. The floor deck (h) is typically chipboard, plywood, cement-bonded particle board or timber planks.

The heat output from any of these forms of construction is quite satisfactory and they are widely used but they have disadvantages, as follows:
a) The heat output from a screeded floor varies according to the spacing of the pipe and in each of the examples described the pipe spacing as it is actually installed is dependant on the skill and accuracy of the installer who must read an installation drawing and place the pipe where the designer intended and at the specified pipe centres.
b) Installation of the pipe is not usually undertaken by an unskilled person but by a specialist and it is difficult to achieve consistent quality of installation across a range of building sites.
c) In each case, the labour cost of installation is high because skilled installers must be used.
d) Each of the construction methods is most suited to spaces which are generally rectangular in shape and each requires a much higher level of installation skill if they are to be used for the heating of spaces which have floors which are irregular in shape or are curved.

For floating floors, there are the following disadvantages:-
a) The heating system is formed on site as an assembly of pipe, diffuser plates and insulation. The diffuser plates in particular often have to be cut to length and installation must be undertaken by skilled or specialist installers.
b) As a consequence, installation is labour-intensive and costly.
c) The diffuser plates themselves are very expensive.
d) The cutting of the diffuser plates must be done with great care because otherwise jagged edges can be left which can damage the heating pipe.
e) The diffuser plates have to be rigid and strong enough to withstand handling on site and to prevent them being damaged too easily. They are prone to being bent while being moved around site and are subject to wind damage when being unloaded.
f) The diffuser plates are noisy in use. The aluminium from which they are made expands and contracts much more than the timber floor deck with which they are in close contact and, as a consequence, differential creep occurs at the boundary between the plate and the floor deck during warm up and cool down, and this creates creaking sounds which users complain about.
g) The use of pre-grooved insulation and standard length diffuser plates is most suited to spaces which are generally rectangular in shape and it is not well-suited for the heating of spaces which have floors which are irregular in shape or curved since this requires considerably more cutting of materials on site.

None of these construction methods suits standardised building designs where there is a need to achieve repeatable heat output and quality of installation on many different sites using a wide variety of differently skilled installers, and where costs must be predictable and minimised.

The method of the present invention has been developed to address these shortcomings.

### Summary of the Invention

According to the present invention there is provided a method of installing underfloor heating in a building, the method including producing a floor plan, designing a pipe layout including supply and return lines from and to a heat source, which pipe layout is based on the use of modular insulating panels formed with communicating channels in which heating pipes can be fitted, producing and supplying the modular insulating panels to site together with instructions concerning the layout which is required, placing the modular insulating panels in position in accordance with the instructions, inserting the pipes in the channels, and placing flooring over the pipes.

The floor plan is preferably a CAD design and the pipe layout is preferably added to the floor plan using a computer.

The pipe layout is preferably overlaid with the layout of the insulation panels which are to be set on the floor and the pipe layout then transferred to each individual panel and transformed into computer programs sent to a computer-controlled machining centre in which production of the panels is effected.

The invention thus involves harnessing the power of the computer to simplify the production and installation process.

The individual panels are preferably foamed or expanded polystyrene panels having a thickness of 40 or 50 mm. and a standard module size of 2,400 mm. by 1,200 mm.

The polystyrene panels may be constructed as described in co-pending Application No. of even date herewith. Alternatively, the panels may be covered with aluminium foil which extends over the top surface of each panel and is a close fit in the channels formed in the panels so that, when the heating pipe is inserted in the channels, the aluminium foil acts as a heat diffuser.

### Brief Description of the Drawings

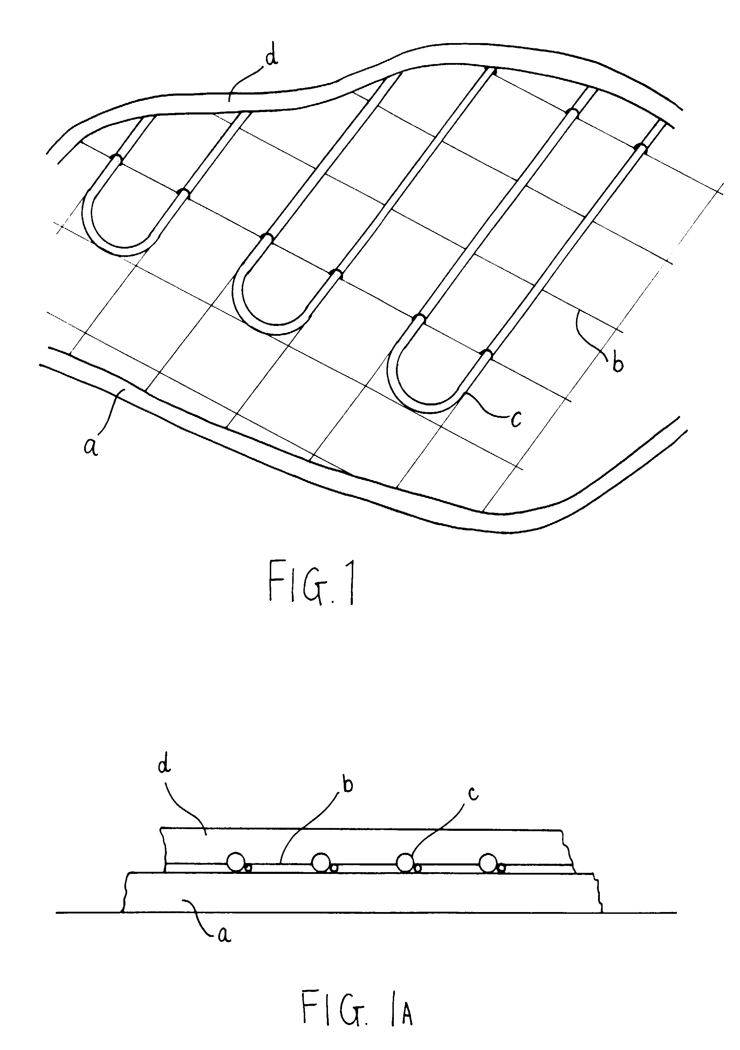

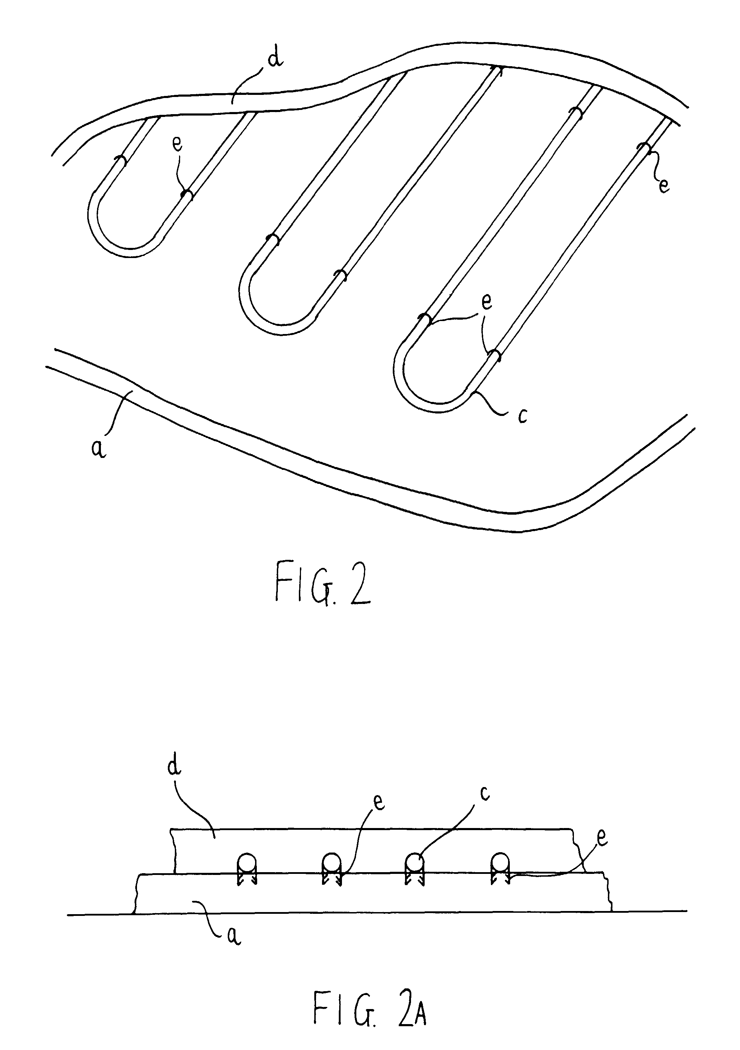

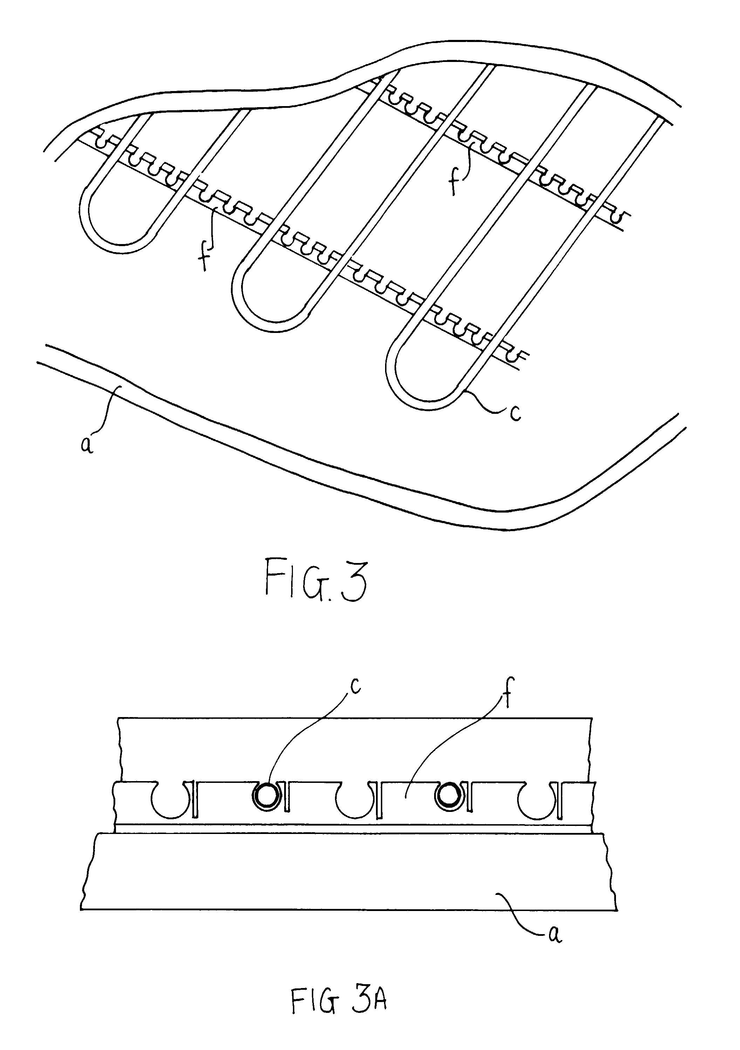

Figures 1 and 1a, Figures 2 and 2a and Figures 3 and 3a show three current methods of installing underfloor heating in a screeded floor.
Figures 4, 4a and 4b show a current method of installing underfloor heating in a screeded floor,

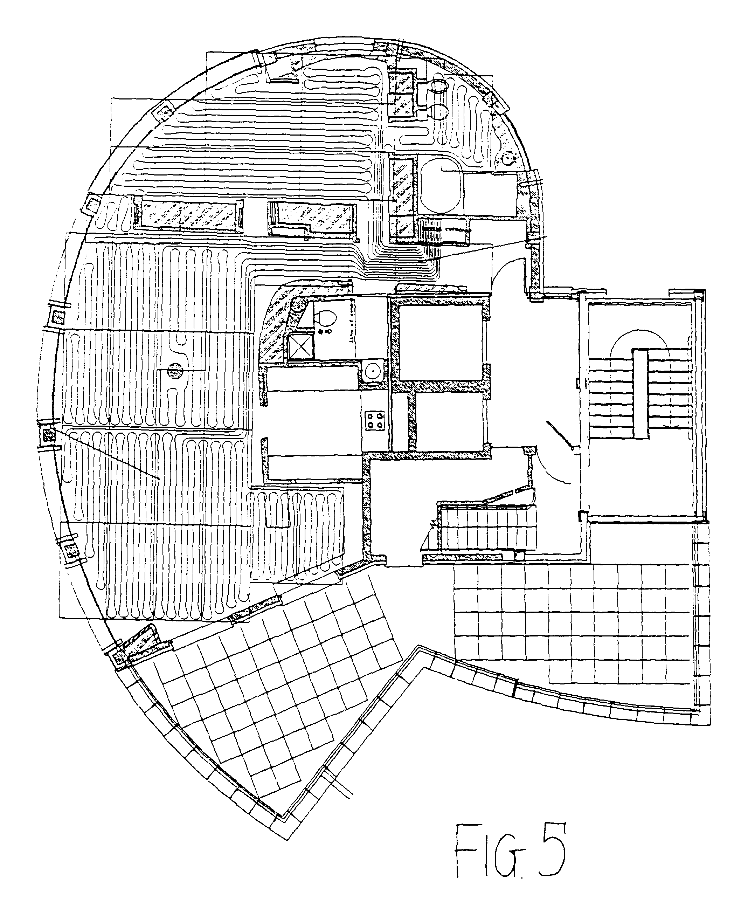

Figure 5 shows a typical floor plan for an underfloor heating system installed by the method of the present invention,

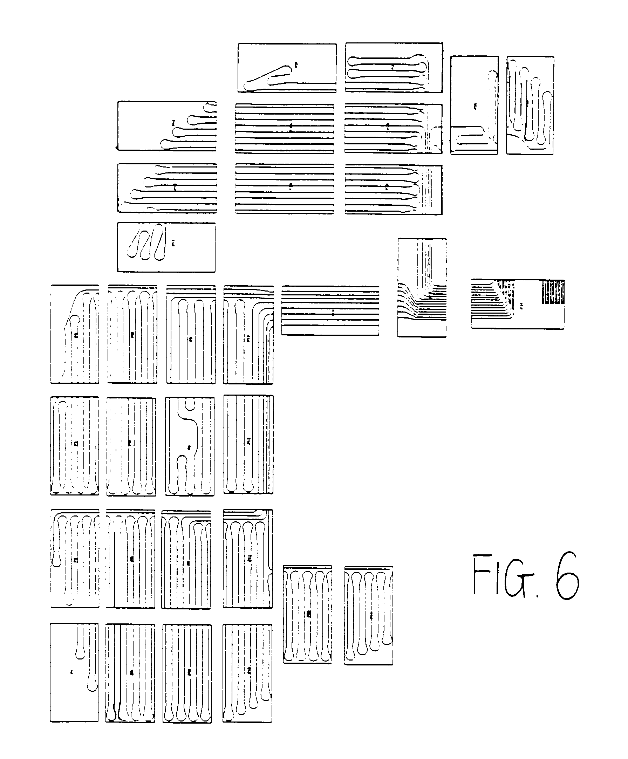

Figure 6 illustrates a variety of individual panels,

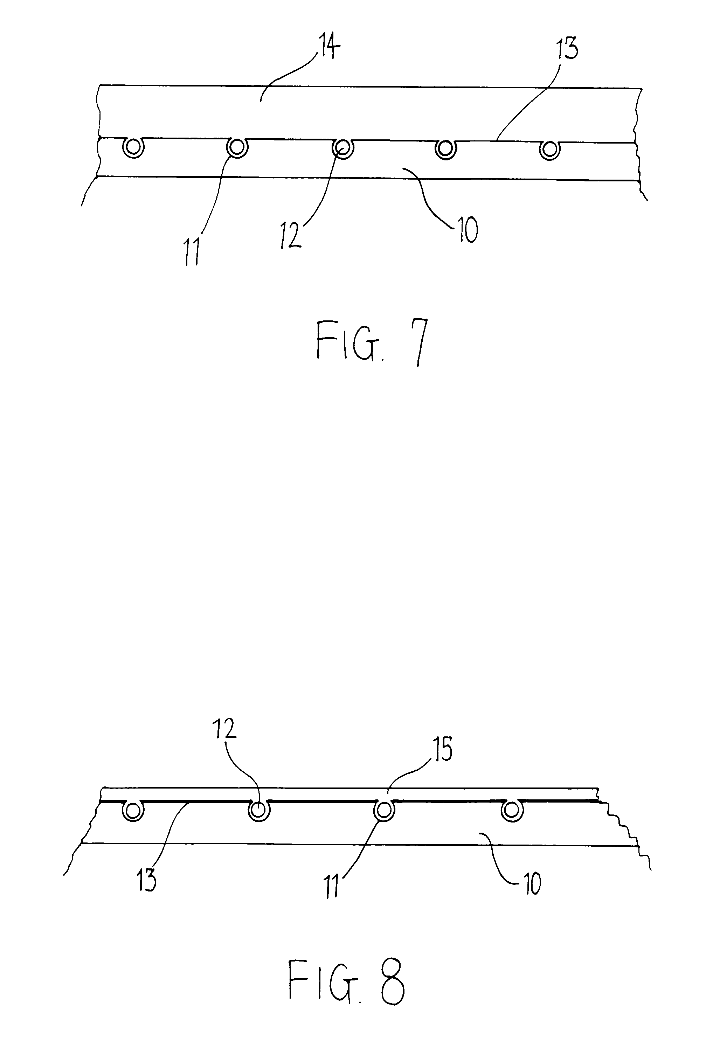

Figure 7 is a sectional showing installation of a panel in a screeded floor construction, and
Figure 8 is a sectional view showing installation of a panel in a floating timber floor construction.

### Description of the Preferred Embodiment

The method of the present invention can include the use of a panel 10 of rigid insulation, for example, foamed polystyrene, which has a channel 11 formed in its top surface into which heating pipe 12 can be pressed.

The pattern of the pipe channel in each panel 10 is determined by the panel's position within a larger pipe layout design, such as that shown in Figure 5, which has been designed to suit the heating requirements of each complete room or space and which is larger than a single panel in area.

A CAD drawing is produced showing the floor plans of the area to be heated. This CAD drawing may be the architect's original drawing and can be moved electronically, by e-mail, between all the professionals involved in the project. An underfloor heating designer adds a layer to the original CAD drawing to show the precise position of the heating pipework, taking into account the position of any obstructions in the floor area.

After the drawing has been approved, the designer then uses the CAD system to overlay the pipework design with the layout of the insulation panels which are to be set on the floor base. A drawing such as that shown in Figure 5 is thus produced. The pipe layout design is transferred by means of a computer onto a number of individual panels, as shown in Figure 6, in such a way that the individual panels form a jigsaw of panels which, when placed on a floor in the correct association one with another, collectively create the pipe channels of the larger pipe layout design illustrated in Figure 5.

The computer takes the information which it receives, based on the information corresponding to the drawing of Figure 5, and turns this into unique programmes which can be used in a computer-controlled machining centre in which each insulation panel is machined individually using a routing cutter to create a jigsaw of insulation panels which are simply set alongside each other on site. Each panel can be numbered individually, and it is even possible to arrange for the panels to be stacked in the correct sequence on the pallet on which they are to be delivered to the site.

A significant feature of the invention is thus to use the computer to transfer the pipe layout design on to the individual insulation panels. Another important step in the development of the method of the present invention is the realisation that it is possible to create unique panels which are individual jigsaw pieces of a much larger layout design.

Previously, a designer was restricted to using standard panels which often have to be trimmed to length on site or which need to have channels cut on site into plain insulation in order that they might be interconnected. Such standard panels are regular rectangles in shape and are, as a consequence, not best suited to rooms or spaces having floors which are irregular or curved.

On site, the insulation panels are set on the ground in the required pattern, in accordance with instructions, e.g. a panel layout, supplied to the on-site installer either with the panels or separately.

Heating pipe is then pressed into each circuit , the flow and return pipes of each circuit are then connected to the manifold assembly and each circuit is pressure-tested.

Because each panel is cut precisely, the pipe approaches to the manifold site can be made very neat. There is no longer any need to cut channels into polystyrene on site with either an electric router or a hot-wire cutter.

In addition, it is possible to incorporate, into the machining pattern, channels to distribute the domestic hot and cold pipework or even conduits for distribution of electric power or other services.

For the first time, a designer of a heating/cooling system is able to design a system for an entire space and then transfer that design onto a pattern of individual panels of invention which, when assembled on site in the correct association one with another are able to represent the design layout for the entire space.

Figure 7 shows a floor section with a foamed polystyrene panel being used in a screeded floor.

The foamed or expanded polystyrene panel 10 has channels 11 formed in its top surface which is (optionally) covered with aluminium foil 13 which is pressed down into the channels and which acts as a heat diffuser to conduct heat away from the pipe 12 and spread it beneath the screed 14. Heating pipe 12 is pressed into the channels before the screed 14 is laid.

Figure 8 shows a floor section with a foamed polystyrene panel 10, as described above, being used in a fully floating timber floor. Aluminium foil is again pressed down into the channels in the panel 10 and acts as a heat diffuser to conduct heat away from the pipe 12 and spread it beneath the timber floor deck 15. The heating pipe 12 is pressed into the channels before the floor deck 15 is laid.

The method of the present invention offers the following advantages over current practice:
a) It becomes possible for all aspects of the heating system to be brought under the control of the designer. The designer produces an overall layout design for the whole of a room or space and then transfers this layout to an assembly of individually-formed pieces.
b) The designer can issue a drawing to site which shows the position of each jigsaw piece, i.e. panel, which can be supplied to site suitably marked to indicate the position in which it is to be fitted.
c) The installer simply arranges each individual piece to be set out on the floor in its correct position, and cuts it to shape, if required.
d) With each panel in its correct position, the heating pipes can be pressed into the channels formed in the top surfaces of the panels and the panels may then be covered either with a screed or with a timber floor deck.
e) For mass-produced buildings, it becomes possible to send the same set of jigsaw pieces (panels) to different sites and for these to be set out onto the sub-floor by quite different installers and for these to achieve identical heating installation quality and heating performance.
f) It becomes possible for the designer to optimise a design and minimise not only the cost of materials but also the cost of installation.
g) When the panels are to be covered with a screed, it is possible to lay duckboards across the top of the insulation and to transport the screed around the room without risk of damaging the pipe.
h) the position of the heating/cooling pipe and the spacings between adjacent lengths of pipe are set entirely by the designer. This eliminates any dependency on the skill and experience of the installer.
i) The use of aluminium foil as a heat diffuser (if aluminium foil is used) avoids the need for expensive rigid aluminium diffuser plates and the possibility of creaking during warm up and cool down.
j) The on-site fitting of the heating pipe is reduced to a simple procedure of pressing the pipe into the channel.

The method of the present invention makes installation of underfloor heating a simple and inexpensive operation. Rigid insulation would have to be installed in a screeded floor or a floating timber floor construction in any event, even if a different non-underfloor heating system was to be used. There is very little additional cost associated with fitting the heating pipe and this does need specialist labour.

As an alternative to the use of a panel having aluminium foil across its top surface, it is possible to use a panel which has, along the length of the pipe channel, wider channel sections formed between short narrow sections The short narrow sections of channel are of such width that they receive the heating pipe as a press fit and the wider sections are intended be filled with an inexpensive thermally-conductive material such as a sand/cement mix which acts as a cheaper alternative to an aluminium foil heat diffuser. Such a panel is described in detail in co-pending Application No. of even date herewith.

Another form of panel which can be used, in addition to the panels described above, is a panel with pipe channels but no aluminium foil. This can be used where the pipe is to remain insulated, for example, where the pipe crosses floor areas where minimal heating is required.

## Claims

1. A method of installing underfloor heating in a building, the method including producing a floor plan, designing a pipe layout including supply and return lines from and to a heat source, which pipe layout is based on the use of modular insulating panels (10) formed with communicating channels (11) in which heating pipes (12) can be fitted, producing and supplying the modular insulating panels (10) to site together with instructions concerning the layout which is required, placing the modular insulating panels (10) in position in accordance with the instructions, inserting the pipes (12) in the channels (11), and placing flooring (14, 15) over the pipes (12).

2. A method as claimed in Claim 1, in which the floor plan is a CAD design and in which the pipe layout is added to the floor plan using a computer.

3. A method as claimed in Claim 2, in which the pipe layout is overlaid with the layout of the insulation panels (10) which are to be set on the floor.

4. A method as claimed in Claim 3, in which the pipe layout is transferred to each individual panel (10) and transformed into computer programs sent to a computer-controlled machining centre in which production of the panels (10) is effected.

5. A method as claimed in any one of the preceding claims, which includes the use of foamed or polystyrene panels (10) the upper surfaces of which are formed with the channels (11) which receive the heating pipes (12).

6. A method as claimed in any one of the preceding claims, in which the flooring is a screeded floor.

7. A method as claimed in any one of Claims 1 to 5, in which the flooring is a fully floating floor.

8. A method as claimed in Claim 5, in which the upper surfaces of the panels (10) are covered with aluminium foil (13) which fits in the channels (11) and acts as a heat diffuser for the heating pipes (12).

9. A method as claimed in Claim 5, in which the panels (10) have, along the length of the pipe channels (11), wider channel sections formed between short narrow sections, the short narrow sections being of such width that they receive the heating pipe (12) as a press fit, and the wider sections being filled, after fitment of the heating pipe (12), with a thermally-conductive material which acts as a heat diffuser.
